# EUROPEAN PATENT SPECIFICATION

(11) **EP 3 118 519 B1**
(45) Date of publication and mention of the grant of the patent: **25.12.2019**
(21) Application number: 16173682.2
(22) Date of filing: 09.06.2016
(51) Int. Cl.: F23D 11/10

(54) **FUEL INJECTOR**
KRAFTSTOFFEINSPRITZER
INJECTEUR DE CARBURANT

(30) Priority: 09.07.2015 GB 201512000
(43) Date of publication of application: 18.01.2017
(73) Proprietor: Rolls-Royce plc, London SW1E 6AT (GB)
(72) Inventor: Carrotte, Jonathan, Derby, DE24 8BJ (GB); Barker, Ashley, Derby, DE24 8BJ (GB); Harding, Stephen, Derby, DE24 8BJ (GB)
(74) Representative: Rolls-Royce plc

(56) References cited:
- EP-A2- 1 391 652
- EP-A2- 1 391 653
- EP-A2- 2 554 909
- WO-A1-99/06767

## Description

This invention concerns fuel injector assemblies for gas turbine engines.

There is a continuing need, driven by environmental concerns and governmental regulations, for improving the efficiency of and decreasing the emissions from gas turbine engines of the type utilised to power jet aircraft, marine vessels or generate electricity. Particularly there is a continuing drive to reduce oxides of nitrogen (NOx) emissions.

Advanced gas turbine combustors must meet these requirements for lower NOx emissions under conditions in which the control of NOx generation is very challenging. For example, the goal for the Ultra Efficient Engine Technology (UEET) gas turbine combustor research being done by' NASA is a 70 percent reduction in NOx emissions and a 15 percent improvement in fuel efficiency compared to ICAO 1996 standards technology. Realisation of the fuel efficiency objectives will require an overall cycle pressure ratio as high as 60 to 1 and a peak cycle temperature of 1600 degrees centigrade or greater. The severe combustor pressure and temperature conditions required for improved fuel efficiency make the NOx emissions goal much more difficult to achieve.

Typical staged low NOx fuel injectors that seek to address this issue have concentrically arranged pilot and main injectors with the main injector surrounding the pilot injector. However, typical staged low NOx injector arrangements have several operational disadvantages, including for example, flame stability and re-light characteristics, the potential for excessive combustor dynamics or pressure fluctuations caused by combustor instability. Combustion instability occurs when the heat release couples with combustor acoustics such that random pressure perturbations in the combustor are amplified into larger pressure oscillations.

These large pressure oscillations, having amplitudes of about 1-5 percent of the combustor pressure, can have catastrophic consequences and thus must be reduced or eliminated. The phenomenon is sometimes referred to as "rumble".

There are many suspected causes for rumble but one understood cause is that a pressure wave generated by acoustic resonance in the combustor coherently interacts with an oncoming fuel-air mixture (reactants) from the fuel injector. The reactants feed the combustion flame with a heat release frequency which is coherent with the pressure wave and this can result in a positive growth rate or resonance of the pressure wave and consequently greater noise. In addition to the noise issue, the nature of the interaction of the incident acoustic wave with the reactants is such as to impair characteristics of the reactants and consequently the quality of the combustion.

EP 1 391 653 A2 discloses a prefilmer for a fuel injection arrangement comprising a body having a fluid flow surface and a downstream edge, the prefilmer arranged so that when working in operative association with the fuel injection arrangement fuel flows over the surface, by means of a passing airflow, to the downstream edge, from where the fuel is shed, characterised in that the prefilmer further comprises a fluid flow mixing means to, in use, enhance the mixing of fuel and air.

In accordance with present invention there is provided a fuel injection system for a gas turbine according to claim 1 or claim 2 or claim 4 or claim 6. Optional features of the present invention are defined in the dependent claims.

The fuel injection system may further comprise a pilot fuel injector section and the surface may be a surface of the pilot fuel injector section.

Characteristics of the reactants which may affect interaction with an oncoming acoustic wave include; the fuel flux (i.e. the mass flow of the mixture) to the flame, the stoichiometry (i.e. air to fuel ratio), mixture properties such as drop size distribution and droplet dispersion, or the velocity vector of the reactants (fuel placement). Fuel injectors are conventionally designed for a given air and fuel pressure drop but without contemplation of acoustic impedance. The fuel injection system of the present invention addresses the issue of acoustic impedance.

It will be appreciated that reactants will exit the fuel injection system and encounter oncoming pressure waves from the combustion chamber at the aft end of the main air blast fuel injector system. The provision of a non-axisymmetric surface as described results in a spatially and/or temporarily varied circumferential reaction to the oncoming wave thereby reducing the coherence of the response relative to an axisymmetric/planar design and hence reducing the incidence of acoustic amplification in the chamber.

Typically, a fuel injector section (which can be a pilot fuel or a main blast fuel injector section) comprises one or more fuel injectors having associated air swirlers which generate swirling, fast moving air for mixing with fuel injected from the fuel injector(s) prior to delivery to a combustion chamber. In accordance with the invention, a surface of an air swirler is made non-axisymmetric or non-planar resulting in a non-axisymmetric distribution of the reactants at the aft end of the main blast fuel injector section where they collide with an oncoming acoustic wave.

A conventional air swirler comprises at least a pair of coaxially aligned circumferential walls defining an annular channel therebetween. Vanes extend across the channel, optionally engaging with both walls. The walls are conventionally uniformly round with a flat aft end in a plane orthogonal to the axis, the annular channel of uniform width and the vanes are conventionally arranged in radially symmetrical arrays. The vanes may be separated into pre-swirl vanes and swirl vanes, the latter sitting downstream of the former. Pre-swirl vanes in general are bent or curved so as to turn an incoming axial flow tangentially. Swirl vanes are angled relative to an incoming non-axial airstream (having passed through the pre-swirl vanes) and shaped more gently to guide the airstream in a circumferential direction. In embodiments of the present invention, any one or more of these components of the air swirler is adapted to create non-uniformity/a lack of radial symmetry/ a non-planar axially facing surface. In some embodiments of the invention, the transmission of an acoustic wave is affected by adapting an array of swirl vanes in the air swirler. The adapted vane arrangements serve to change the transmission of an acoustic wave by varying the open area between blades and thereby damping the wave.

In a first embodiment, swirl vanes are arranged in an axially stepped pattern, one or more vanes being arranged along a circumference which is axially displaced from a circumference along which one or more other vanes are arranged. In this embodiment, the vanes may be equally circumferentially spaced and have the same pitch and chord.

In other embodiments, vanes are arranged along a common circumference but may be unequally spaced. In these embodiments, for a given spacing (pitch) between vanes, the vane size, angle and/or shape may be adapted to preserve the required swirl characteristics for achieving flow structure for good flame anchoring. For example, an array of vanes might comprise a first plurality of vanes with a first length, pitch and thickness and a second plurality of vanes having a second length, pitch and thickness, the first length being shorter than the second length, the first pitch being smaller than the second pitch and the first thickness being greater than the second thickness, or a combination thereof. The first plurality and second plurality may be sub divided into groups, groups of the first plurality being interspersed between groups of the second plurality around the common circumference.

In an alternative arrangement, groups of similarly configured vanes are arranged with varying pitches around a common circumference. Desirably in these arrangements, the vanes have an elongated chord configured to conserve swirl.

In yet another embodiment, pre-swirl vanes are elongated whereby to increase inertia in the air stream. The pre swirl vanes may be grouped into a small plurality of pre-swirl vanes having gradually decreasing lengths at an axially downstream end of the vanes. The inertia in passages between adjacent longer vanes is greater than between adjacent shorter length vanes and so results in a varied circumferential flow pattern exiting the fuel injection system and consequent impedance of an oncoming acoustic wave. A similar effect can be achieved by arranging small groups of pre-swirl vanes of similar configuration at an angle to a circumferential reference plane. An incoming air stream will travel further to the most axially distant pre-swirl vanes than to the more proximal vanes and emerge at different times creating a non-axisymmetric flow pattern dynamic response downstream.

In yet other embodiments, the walls of the air swirler can be adapted. For example, the aft end could be axially stepped rather than flat, thereby impeding a circumferentially uniform oncoming acoustic wave. In another alternative, the radius of one or both walls could be varied adjusting the radial height of the channel around a circumferential reference plane resulting in a non-axisymmetric flow pattern downstream.

An annular fuel injection section may comprise an annular prefilming surface onto which fuel is dispensed prior to atomisation at the axial tip of the prefilmer by air exiting an adjacent air swirler. An axially downstream facing end of the prefilmer (which defines the tip) is conventionally axisymmetric. In some embodiments of the invention, the tip has a varying axial length. For example, the tip may present axially with an undulating, a crenelated or a serrated profile. The tip profile may have a uniform pattern about the circumference. Alternatively, the tip is provided with a non-uniform pattern of axial notches.

In another alternative, a radial face of the prefilming surface can be profiled in an axial direction, for example, the surface is undulated concave or convex in cross section.

In yet another alternative, surfaces of the air swirler walls or prefilmer can be textured to introduce small radial or axially facing variations in the surface which are sufficient to generate an acoustic impedance that locally alters the fuel mixture delivery.

Embodiments will now be described by way of example only, with reference to the Figures, in which:
Figure 1 is a sectional side view of a gas turbine engine;
Figure 2 is a section through a fuel injection system as is known in the prior art;
Figure 3 is a schematic plan view of a wall of an air swirler in the fuel injection system of Figure 2.
Figure 4 is a schematic plan view of a wall of an air swirler adapted in accordance with another embodiment of the invention;
Figure 5 is a schematic plan view of a wall of an air swirler adapted in accordance with another embodiment of the invention;
Figure 6 is a schematic plan view of a wall of an air swirler adapted in accordance with an embodiment of the invention;
Figure 7 is a schematic plan view of a wall of an air swirler adapted in accordance with another embodiment of the invention;
Figure 8 is a schematic plan view of a wall of an air swirler in the fuel injection system of Figure 2 showing the pre-swirler vane geometry;
Figure 9 is a schematic plan view of a wall of an air swirler adapted in accordance with another embodiment of the invention;
Figure 10 is a schematic plan view of a wall of an air swirler adapted in accordance with another embodiment of the invention;
Figure 11 is schematic end view of a section of an axial tip of the prefilmer adapted in accordance with another embodiment of the invention;
Figure 12 is schematic end view of a section of an axial tip of the prefilmer adapted in accordance with another embodiment of the invention;
Figure 13 is schematic end view of a section of an axial tip of the prefilmer adapted in accordance with another embodiment of the invention;
Figure 14 is a schematic view showing examples of profiling of a prefilming surface in an axial direction in accordance with embodiments of the invention.
Figure 15 is a schematic axial view of multiple main airblast fuel injector sections arranged in an annular array.

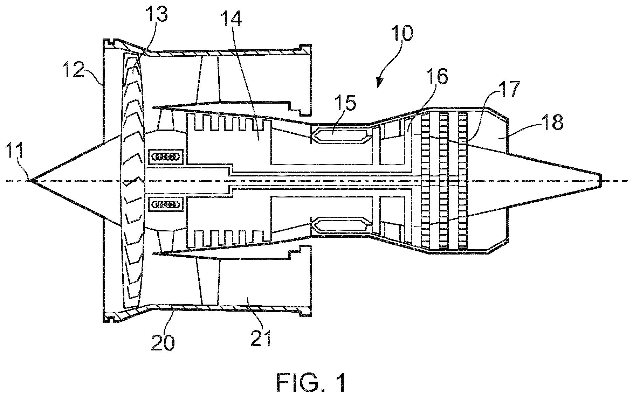

With reference to Figure 1, a gas turbine engine is generally indicated at 10, having a principal and rotational axis 11. The engine 10 comprises, in axial flow series, an air intake 12, a propulsive fan 13, a high-pressure compressor 14, combustion equipment 15, a high-pressure turbine 16, a low-pressure turbine 17 and an exhaust nozzle 18. A nacelle 20 generally surrounds the engine 10 and defines the intake 12.

The gas turbine engine 10 works in the conventional manner so that air entering the intake 12 is accelerated by the fan 13 to produce two air flows: a first air flow into the high-pressure compressor 14 and a second air flow which passes through a bypass duct 21 to provide propulsive thrust. The high-pressure compressor 14 compresses the air flow directed into it before delivering that air to the combustion equipment 15.

In the combustion equipment 15 the air flow is mixed with fuel and the mixture combusted. The resultant hot combustion products then expand through, and thereby drive the high and low-pressure turbines 16, 17 before being exhausted through the nozzle 18 to provide additional propulsive thrust. The high 16 and low 17 pressure turbines drive respectively the high pressure compressor 14 and the fan 13, each by suitable interconnecting shaft.

Other gas turbine engines to which the present disclosure may be applied may have alternative configurations. By way of example such engines may have an alternative number of interconnecting shafts (e.g. three) and/or an alternative number of compressors and/or turbines. Further the engine may comprise a gearbox provided in the drive train from a turbine to a compressor and/or fan.

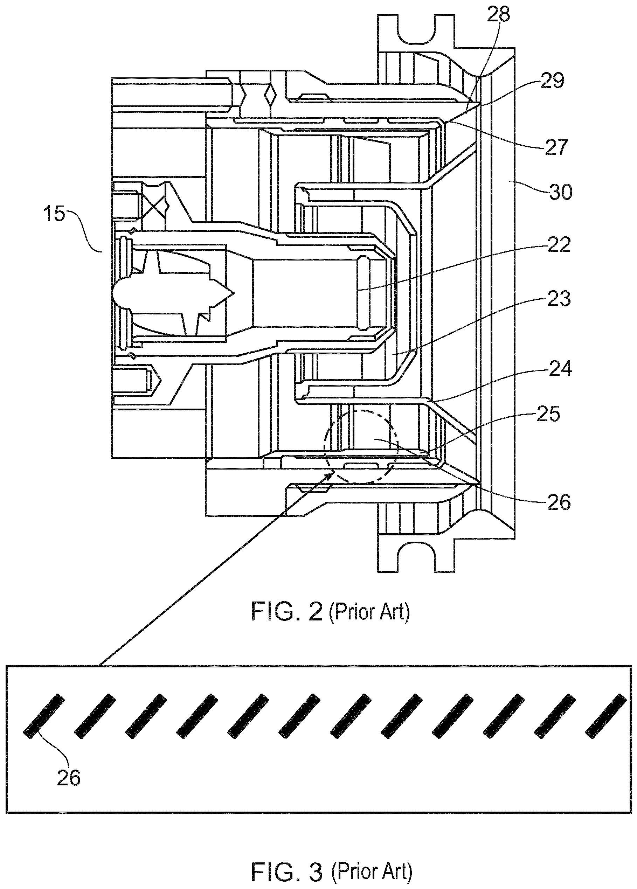

Figure 2 shows in more detail a fuel injection system of a type known to be used in the combustion equipment 15 of a gas turbine engine 10. As can be seen a pilot fuel injector 22 is arranged on an axis with annular components coaxially arranged around it. Radially adjacent the pilot fuel injector 22 is a pilot air swirler 23. A separator 24 bounds the pilot air swirler and further serves as a radially inner wall to a radially outboard main fuel air swirler having radially outer wall 25 and vanes 26 which extend between walls 24 and 25. Radially outboard of the main fuel air swirler is an annular main airblast fuel injector 27. Fuel injected from the main airblast fuel injector 27 spreads along prefilmer surface 28 and is atomised at the axial tip of the prefilmer 29 through interaction with air exiting the main fuel air swirler. The atomised air/fuel mixture is delivered to the combustion chamber 30.

Figure 3 shows a schematic view of a circumferential wall 25 of the main fuel air swirler and illustrates the arrangement of the vanes thereon.

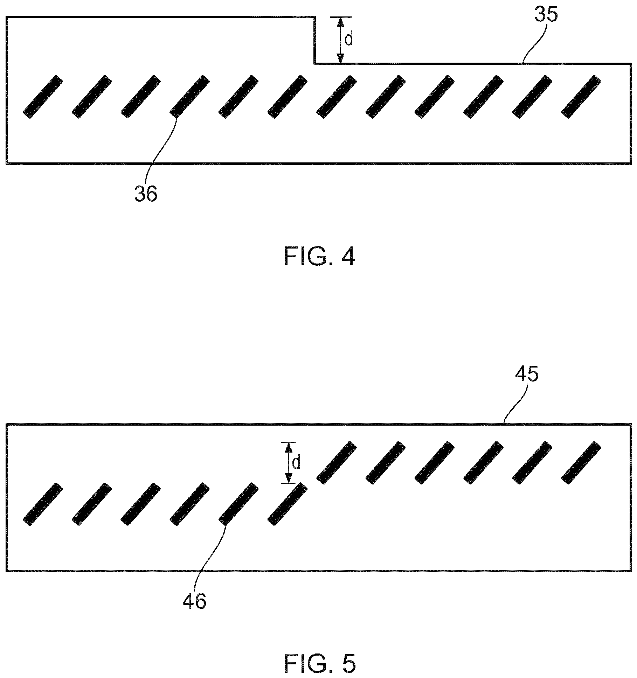

Figure 4 shows an air swirler passage wall in accordance with a first embodiment of the invention. In comparison to the air swirler of Figures 2 and 3, the wall 35 is made relatively longer in an axial dimension by a length d for part of the circumference. The vanes 36 are substantially the same and similarly arranged as the vanes of Figure 3 to provide nominally similar levels of swirl but different local impedances.

Figure 5 shows an air swirler wall in accordance with a second embodiment of the invention. In comparison to the air swirler of Figures 2 and 3, the passage wall 45 is made relatively longer in an axial dimension by a length d along the entire circumference. The vanes 46 are substantially the same configuration as those of Figure 3 but are arranged in an axially stepped configuration to provide nominally similar levels of swirl but different local impedances.

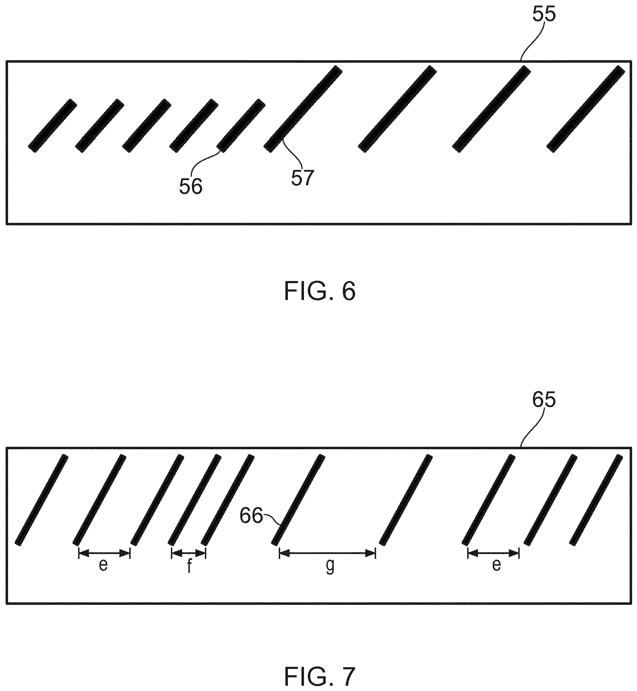

Figure 6 shows an air swirler passage wall in accordance with a third embodiment of the invention. In comparison to the air swirler of Figures 2 and 3, the wall 55 is made relatively longer in an axial dimension by a length d along the entire circumference. There are two groups of vanes 56 and 57. The vanes 56 are individually substantially the same configuration as those of Figure 3 and are similarly arranged. Vanes 57 of the second group are longer and spaced further apart to provide nominally similar levels of swirl but different local impedances.

Figure 7 shows an air swirler wall in accordance with a fourth embodiment of the invention. In comparison to the air swirler of Figures 2 and 3, the wall 65 is made relatively longer in an axial dimension along the entire circumference. The vanes 66 are consistent in length but are arranged at varying separations e, f, g around the circumference.

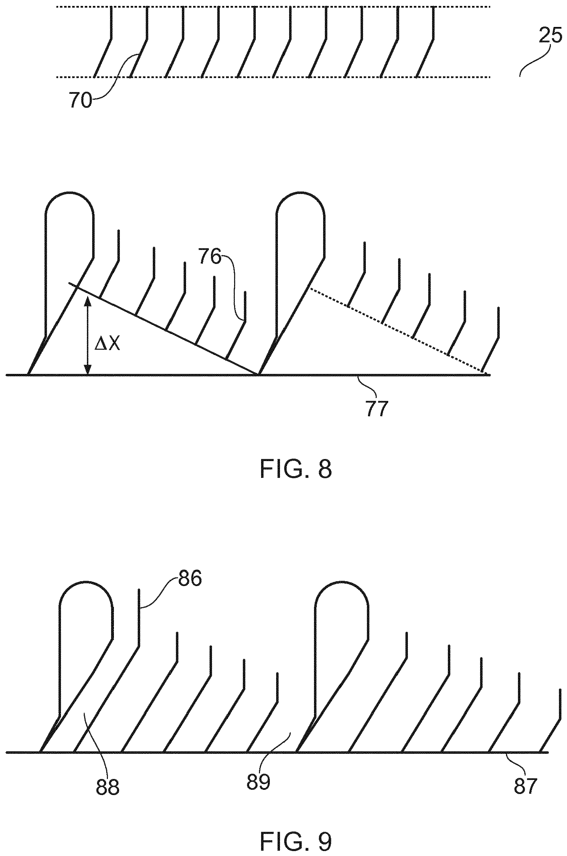

Figure 8 shows an air swirler wall known to be used in a fuel injection system such as that in Figure 1. This figure shows in more detail the shape of pre-swirl vanes 70 which would sit axially upstream of the vanes already discussed. The figure provides a comparison for a fifth embodiment of the invention also shown in Figure 8. In the embodiment, vanes 76 individually have a similar configuration to those of the prior art arrangement but are grouped and each group is inclined at an angle ΔX to a reference circumferential plane 77.

Figure 9 shows a sixth embodiment of the invention which is broadly similar to the fifth embodiment of Figure 8. However, in this embodiment the vanes 86 are extended back to the reference circumferential plane 87. It will be appreciated that greater inertia will be effected on the air flow in passage 88 than in passage 89.

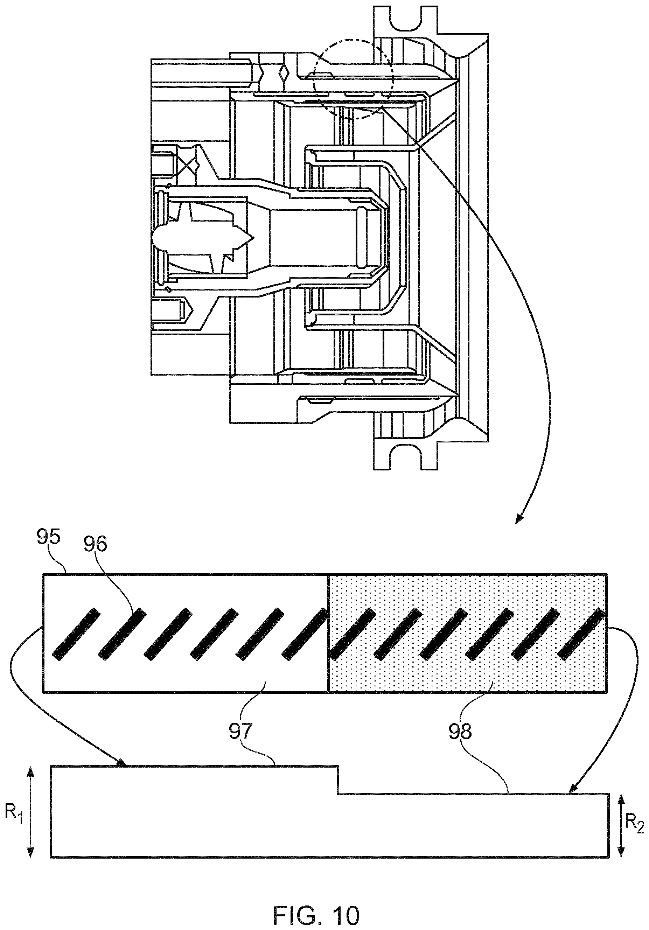

Figure 10 shows a seventh embodiment of the invention wherein the circumferential wall 95 of an air swirler with a radial dimension r is radially stepped to provide two regions 97 and 98 of different radial dimensions R₁ and R₂.

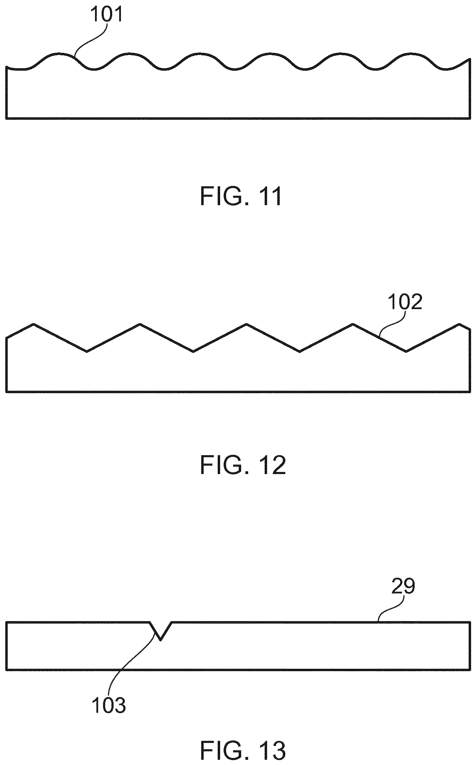

Figures 11, 12 and 13 show eighth, ninth and tenth embodiments of the invention. In each of these embodiments, the axially downstream facing end of the prefilmer (tip) 29 has been profiled. In Figure 11, axially extending undulations 101 are provided. In Figure 12, axially extending serrations are provided. In Figure 13, an axially extending notch 103 is provided. Figure 1 shows cross section views of the prefilmer surface of four pre-filmers which are suited to use in the present invention. Prefilmer surface 141 has a continuous radius along its length. Prefilmer surface 142 has a scarfed surface with a radius gradually increasing towards the downstream end. Prefilmer surface 143 has a concave surface, the radius varying across the surface. Prefilmer surface 144 has an undulating surface, the radius varying across the surface. A combination of the described features can be implemented around the annulus to reduce coherence and the associated acoustic waves.

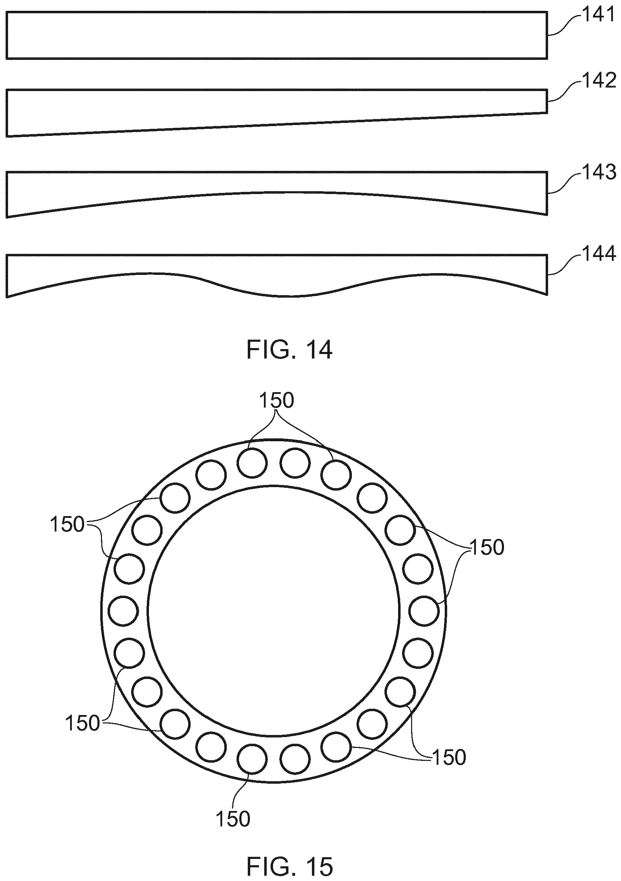

In some embodiments of injection fuel systems in accordance with the present invention, multiple main airblast fuel injector sections are arranged in an annular array as shown in Figure 15. Alternate main airblast fuel injector sections 150 are adapted in accordance with one or more of the previously described embodiments. Other main airblast fuel injector sections have a prior art configuration.

## Claims

1. A fuel injection system for a gas turbine engine (10) comprising; a main airblast fuel injector section (25, 26, 27, 28, 29), the main airblast fuel injector section having an aft end (29) facing a combustion chamber (30) and wherein a surface exposed to a main air flow through the injection system is non-axisymmetric, or, non-planar in a reference circumferential plane, and configured to generate acoustic impedance at or adjacent the aft end where, in use, the main air flow collides with an oncoming acoustic wave, wherein the surface comprises a first annular wall of an annular chamber of an air swirler (55) having an annular array of swirl vanes (46) extending radially across the annular chamber to a second wall of the annular chamber and the annular array of swirl vanes (46) is configured to generate acoustic impedance by the annular array including an axial step.

2. A fuel injection system for a gas turbine engine (10) comprising; a main airblast fuel injector section (25, 26, 27, 28, 29), the main airblast fuel injector section having an aft end (29) facing a combustion chamber (30) and wherein a surface exposed to a main air flow through the injection system is non-axisymmetric, or, non-planar in a reference circumferential plane, and configured to generate acoustic impedance at or adjacent the aft end where, in use, the main air flow collides with an oncoming acoustic wave, wherein the surface comprises a first annular wall of an annular chamber of an air swirler (55) having an annular array of vanes (56, 57) extending radially across the annular chamber to a second wall of the annular chamber and the annular array of vanes (56, 57) is configured to generate acoustic impedance, by the annular array of vanes (56, 57) including a first plurality of vanes (56) with a first length, pitch and thickness and a second plurality of vanes (57) having a second length, pitch and thickness, the first length being shorter than the second length, the first pitch being smaller than the second pitch and the first thickness being greater than the second thickness.

3. A fuel injection system as claimed in claim 2 wherein the first plurality and second plurality are divided into groups, groups of the first plurality being interspersed between groups of the second plurality around a common circumference.

4. A fuel injection system for a gas turbine engine (10) comprising; a main airblast fuel injector section (25, 26, 27, 28, 29), the main airblast fuel injector section having an aft end (29) facing a combustion chamber (30) and wherein a surface exposed to a main air flow through the injection system is non-axisymmetric, or, non-planar in a reference circumferential plane, and configured to generate acoustic impedance at or adjacent the aft end where, in use, the main air flow collides with an oncoming acoustic wave, wherein the surface comprises a first annular wall of an annular chamber of an air swirler (55) having an annular array of vanes (66) extending radially across the annular chamber to a second wall of the annular chamber and the annular array of vanes (66) is configured to generate acoustic impedance by the annular array of vanes (66) on the annular wall including groups of similarly configured vanes arranged with varying pitches (e, f, g) around a common circumference.

5. A fuel injection system as claimed in claim 4 wherein the vanes have an elongated chord configured to conserve swirl.

6. A fuel injection system for a gas turbine engine (10) comprising; a main airblast fuel injector section (25, 26, 27, 28, 29), the main airblast fuel injector section having an aft end (29) facing a combustion chamber (30) and wherein a surface exposed to a main air flow through the injection system is non-axisymmetric, or, non-planar in a reference circumferential plane, and configured to generate acoustic impedance at or adjacent the aft end where, in use, the main air flow collides with an oncoming acoustic wave, wherein the surface comprises a first annular wall of an annular chamber of an air swirler (55) having an annular array of vanes (76) extending radially across the annular chamber to a second wall of the annular chamber and the annular array of vanes (76) is configured to generate acoustic impedance wherein the vanes are pre-swirl vanes (76) and the annular array includes a plurality of grouped pre-swirl vanes of similar configuration arranged along a circumferential reference plane, each group arranged at an angle to the reference plane.

7. A fuel injection system as claimed in claim 6 wherein each vane is extended to meet the circumferential reference plane.

8. A fuel injection system as claimed in any preceding claim further comprising a pilot fuel injector section (22, 23) and wherein the surface is a surface of the pilot fuel injector section.

9. A gas turbine engine incorporating a fuel injection system configured according to any preceding claim.

## Patentansprüche

1. Kraftstoffeinspritzsystem für ein Gasturbinentriebwerk (10) umfassend;
einen Hauptdruckluftkraftstoffeinspritzabschnitt (25, 26, 27, 28, 29), wobei der Hauptdruckluftkraftstoffeinspritzabschnitt ein hinteres Ende (29) aufweist, das einer Verbrennungskammer (30) zugewandt ist, und wobei eine Oberfläche, die einem Hauptluftstrom durch das Einspritzsystem ausgesetzt ist, nicht achsensymmetrisch oder in einer Bezugsumfangsebene nicht planar ist und dazu konfiguriert ist, eine akustische Impedanz am oder in der Nähe des hinteren Endes zu erzeugen, wobei im Betrieb der Hauptluftstrom mit einer ankommenden akustischen Welle kollidiert, wobei die Oberfläche eine erste Ringwand einer Ringkammer eines Luftverwirblers (55) umfasst, der eine ringförmige Anordnung von Verwirbelungsschaufeln (46) aufweist, die sich radial über die Ringkammer hinweg zu einer zweiten Wand der Ringkammer erstrecken und die ringförmige Anordnung von Verwirbelungsschaufeln (46) dazu konfiguriert ist, akustische Impedanz durch die ringförmige Anordnung, die eine axiale Stufe beinhaltet, zu erzeugen.

2. Kraftstoffeinspritzsystem für ein Gasturbinentriebwerk (10), umfassend:
einen Hauptdruckluftkraftstoffeinspritzabschnitt (25, 26, 27, 28, 29), wobei der Hauptdruckluftkraftstoffeinspritzabschnitt ein hinteres Ende (29) aufweist, das einer Verbrennungskammer (30) zugewandt ist, und wobei eine Oberfläche, die einem Hauptluftstrom durch das Einspritzsystem ausgesetzt ist, nicht achsensymmetrisch oder in einer Bezugsumfangsebene nicht planar ist und dazu konfiguriert ist, eine akustische Impedanz am oder in der Nähe des hinteren Endes zu erzeugen, wobei im Betrieb der Hauptluftstrom mit einer ankommenden akustischen Welle kollidiert, wobei die Oberfläche eine erste Ringwand einer Ringkammer eines Luftverwirblers (55) umfasst, der eine ringförmige Anordnung von Schaufeln (56, 57) aufweist, die sich radial über die Ringkammer hinweg zu einer zweiten Wand der Ringkammer erstrecken und die ringförmige Anordnung von Schaufeln (56, 57) dazu konfiguriert ist, akustische Impedanz durch die ringförmige Anordnung von Schaufeln (56, 57), die eine erste Vielzahl von Schaufeln (56) mit einer ersten Länge, Teilung und Dicke und eine zweite Vielzahl von Schaufeln (57) mit einer zweiten Länge, Teilung und Dicke beinhaltet, wobei die erste Länge kürzer als die zweite Länge ist, die erste Teilung kleiner als die zweite Teilung ist und die erste Dicke größer als die zweite Dicke ist, zu erzeugen.

3. Kraftstoffeinspritzsystem nach Anspruch 2, wobei die erste Vielzahl und die zweite Vielzahl in Gruppen unterteilt sind, wobei Gruppen der ersten Vielzahl um einen gemeinsamen Umfang zwischen Gruppen der zweiten Vielzahl verteilt sind.

4. Kraftstoffeinspritzsystem für ein Gasturbinentriebwerk (10), umfassend;
einen Hauptdruckluftkraftstoffeinspritzabschnitt (25, 26, 27, 28, 29), wobei der Hauptdruckluftkraftstoffeinspritzabschnitt ein hinteres Ende (29) aufweist, das einer Verbrennungskammer (30) zugewandt ist, und wobei eine Oberfläche, die einem Hauptluftstrom durch das Einspritzsystem ausgesetzt ist, nicht achsensymmetrisch oder in einer Bezugsumfangsebene nicht planar ist und dazu konfiguriert ist, eine akustische Impedanz am oder in der Nähe des hinteren Endes zu erzeugen, wobei im Betrieb der Hauptluftstrom mit einer ankommenden akustischen Welle kollidiert, wobei die Oberfläche eine erste Ringwand einer Ringkammer eines Luftverwirblers (55) umfasst, der eine ringförmige Anordnung von Schaufeln (66) aufweist, die sich radial über die Ringkammer hinweg zu einer zweiten Wand der Ringkammer erstrecken und die ringförmige Anordnung von Schaufeln (66) dazu konfiguriert ist, akustische Impedanz durch die ringförmige Anordnung von Schaufeln (66) an der Ringwand, die Gruppen von ähnlich konfigurierten Schaufeln, die mit unterschiedlichen Teilungen (e, f, g) um einen gemeinsamen Umfang angeordnet sind, beinhaltet, zu erzeugen.

5. Kraftstoffeinspritzsystem nach Anspruch 4, wobei die Schaufeln eine längliche Sehne aufweisen, die dazu konfiguriert ist, Verwirbelungen zu erhalten.

6. Kraftstoffeinspritzsystem für ein Gasturbinentriebwerk (10), umfassend;
einen Hauptdruckluftkraftstoffeinspritzabschnitt (25, 26, 27, 28, 29), wobei der Hauptdruckluftkraftstoffeinspritzabschnitt ein hinteres Ende (29) aufweist, das einer Verbrennungskammer (30) zugewandt ist, und wobei eine Oberfläche, die einem Hauptluftstrom durch das Einspritzsystem ausgesetzt ist, nicht achsensymmetrisch oder in einer Bezugsumfangsebene nicht planar ist und dazu konfiguriert ist, eine akustische Impedanz am oder in der Nähe des hinteren Endes zu erzeugen, wobei im Betrieb der Hauptluftstrom mit einer ankommenden akustischen Welle kollidiert, wobei die Oberfläche eine erste Ringwand einer Ringkammer eines Luftverwirblers (55) umfasst, der eine ringförmige Anordnung von Schaufeln (76) aufweist, die sich radial über die Ringkammer hinweg zu einer zweiten Wand der Ringkammer erstrecken und die ringförmige Anordnung von Schaufeln (76) dazu konfiguriert ist, akustische Impedanz zu erzeugen, wobei die Schaufeln Vorverwirbelungsschaufeln (76) sind und die ringförmige Anordnung eine Vielzahl gruppierter Vorverwirbelungsschaufeln ähnlicher Konfiguration beinhaltet, die entlang einer Bezugsumfangsebene angeordnet sind, wobei jede Gruppe in einem Winkel zur Bezugsebene angeordnet ist.

7. Kraftstoffeinspritzsystem nach Anspruch 6, wobei jede Schaufel verlängert ist, dass sie auf die Bezugsumfangsebene trifft.

8. Kraftstoffeinspritzsystem nach einem der vorhergehenden Ansprüche, ferner umfassend das einen Pilotkraftstoffeinspritzabschnitt (22, 23) und wobei die Oberfläche eine Oberfläche des Pilotkraftstoffeinspritzabschnitts ist.

9. Gasturbinentriebwerk, in dem ein Kraftstoffeinspritzsystem aufgenommen ist, das nach einem der vorhergehenden Ansprüche konfiguriert ist.

## Revendications

1. Système d'injection de carburant pour une turbine à gaz (10) comprenant :
une section principale d'injecteur de carburant à air soufflé (25, 26, 27, 28, 29), la section principale d'injecteur de carburant à air soufflé ayant une extrémité avant (29) orientée vers une chambre de combustion (30) et dans laquelle une surface exposée à un flux d'air principal à travers le système d'injection est non-axisymmétrique, ou, non-planaire sur un plan circonférentiel de référence, et configurée pour générer une impédance acoustique au niveau de ou adjacente à l'extrémité avant où, en utilisation, le flux d'air principal entre en collision avec une onde acoustique entrante, dans lequel la surface comprend une première paroi annulaire d'une chambre annulaire d'un tourbillonneur d'air (55) ayant un réseau annulaire d'aubes de tourbillonnement (46) s'étendant radialement à travers la chambre annulaire jusqu'à une deuxième paroi de la chambre annulaire et le réseau annulaire d'aubes de tourbillonnement (46) est configuré pour générer une impédance acoustique par le réseau annulaire incluant un étage axial.

2. Système d'injection de carburant pour une turbine à gaz (10) comprenant :
une section principale d'injecteur de carburant à air soufflé (25, 26, 27, 28, 29), la section principale d'injecteur de carburant à air soufflé ayant une extrémité avant (29) orientée vers une chambre de combustion (30) et dans laquelle une surface exposée à un flux d'air principal à travers le système d'injection est non-axisymmétrique, ou, non-planaire sur un plan circonférentiel de référence, et configurée pour générer une impédance acoustique au niveau de ou adjacente à l'extrémité avant où, en utilisation, le flux d'air principal entre en collision avec une onde acoustique entrante, dans lequel la surface comprend une première paroi annulaire d'une chambre annulaire d'un tourbillonneur d'air (55) ayant un réseau annulaire d'aubes (56, 57) s'étendant radialement à travers la chambre annulaire jusqu'à une deuxième paroi de la chambre annulaire et le réseau annulaire d'aubes (56, 57) est configuré pour générer une impédance acoustique, par le réseau annulaire d'aubes (56, 57) incluant une première pluralité d'aubes (56) avec des premiers longueur, pas et épaisseur et une deuxième pluralité d'aubes (57) ayant des deuxièmes longueur, pas et épaisseur, la première longueur étant plus courte que la deuxième longueur, le premier pas étant plus petit que le deuxième pas et la première épaisseur étant supérieure à la deuxième épaisseur.

3. Système d'injection de carburant selon la revendication 2, dans lequel la première pluralité et la deuxième pluralité sont divisées en groupes, des groupes de la première pluralité étant intercalés entre des groupes de la deuxième pluralité autour d'une circonférence commune.

4. Système d'injection de carburant pour une turbine à gaz (10) comprenant :
une section principale d'injecteur de carburant à air soufflé (25, 26, 27, 28, 29), la section principale d'injecteur de carburant à air soufflé ayant une extrémité avant (29) orientée vers une chambre de combustion (30) et dans laquelle une surface exposée à un flux d'air principal à travers le système d'injection est non-axisymmétrique, ou, non-planaire sur un plan circonférentiel de référence, et configurée pour générer une impédance acoustique au niveau de ou adjacente à l'extrémité avant où, en utilisation, le flux d'air principal entre en collision avec une onde acoustique entrante, dans lequel la surface comprend une première paroi annulaire d'une chambre annulaire d'un tourbillonneur d'air (55) ayant un réseau annulaire d'aubes (66) s'étendant radialement à travers la chambre annulaire jusqu'à une deuxième paroi de la chambre annulaire et le réseau annulaire d'aubes (66) est configuré pour générer une impédance acoustique par le réseau annulaire d'aubes (66) sur la paroi annulaire incluant des groupes d'aubes configurées de manière similaire agencées avec des pas variables (e, f, g) autour d'une circonférence commune.

5. Système d'injection de carburant selon la revendication 4, dans lequel les aubes ont une corde allongée configurée pour conserver le tourbillonnement.

6. Système d'injection de carburant pour une turbine à gaz (10) comprenant :
une section principale d'injecteur de carburant à air soufflé (25, 26, 27, 28, 29), la section principale d'injecteur de carburant à air soufflé ayant une extrémité avant (29) orientée vers une chambre de combustion (30) et dans laquelle une surface exposée à un flux d'air principal à travers le système d'injection est non-axisymmétrique, ou, non-planaire sur un plan circonférentiel de référence, et configurée pour générer une impédance acoustique au niveau de ou adjacente à l'extrémité avant où, en utilisation, le flux d'air principal entre en collision avec une onde acoustique entrante, dans lequel la surface comprend une première paroi annulaire d'une chambre annulaire d'un tourbillonneur d'air (55) ayant un réseau annulaire d'aubes (76) s'étendant radialement à travers la chambre annulaire jusqu'à une deuxième paroi de la chambre annulaire et le réseau annulaire d'aubes (76) est configuré pour générer une impédance acoustique dans lequel les aubes sont des aubes de pré-tourbillonnement (76) et le réseau annulaire inclut une pluralité d'aubes de pré-tourbillonnement groupées de configuration similaire agencées le long d'un plan de référence circonférentiel, chaque groupe agencé à un angle par rapport au plan de référence.

7. Système d'injection de carburant selon la revendication 6, dans lequel chaque aube est étendue pour rencontrer le plan de référence circonférentiel.

8. Système d'injection de carburant selon l'une quelconque revendication précédente, comprenant en outre une section d'injecteur de carburant pilote (22, 23) et dans lequel la surface est une surface de la section d'injecteur de carburant pilote.

9. Turbine à gaz intégrant un système d'injection de carburant configuré selon l'une quelconque revendication précédente.
